# EUROPÄISCHE PATENTSCHRIFT

(11) **EP 3 593 090 B1**
(45) Veröffentlichungstag und Bekanntmachung des Hinweises auf die Patenterteilung: **12.05.2021**
(21) Anmeldenummer: 18710814.7
(22) Anmeldetag: 06.03.2018
(51) Int. Cl.: G01C 21/34, B60W 30/06, B60K 28/06, B62D 15/02, B60W 60/00

(54) **VERFAHREN UND EINRICHTUNG ZUM AUTOMATISIERTEN FAHREN MIT SICHEREM HALTEPUNKT**
METHOD AND DEVICE FOR AUTOMATED DRIVING WITH A SAFE STOP POINT
PROCÉDÉ ET DISPOSITIF DE CONDUITE AUTOMATISÉE AVEC UN POINT D'ARRÊT SÛR

(30) Priorität: 07.03.2017 DE 102017203678
(43) Veröffentlichungstag der Anmeldung: 15.01.2020
(73) Patentinhaber: Continental Automotive GmbH, 30165 Hannover (DE)
(72) Erfinder: DOCHOW, Gerhard, 35580 Wetzlar (DE); BIEGER, Stefan, 63667 Nidda (DE)
(74) Vertreter: Continental Corporation
(86) Internationale Anmeldenummer: PCT/EP2018/055484
(87) Internationale Veröffentlichungsnummer: WO 2018/162489

(56) Entgegenhaltungen:
- PETER MIRWALDT: "Funktionsentwicklung eines Nothalteassistenzsystems bei kardiovaskulär bedingter Fahrunfähigkeit", BERICHTE AUS DEM DLR-INSTITUT FÜR VERKEHRSSYSTEMTECHNIK; DLR-TS, Bd. 26, Nr. 1, 30. November 2014 (2014-11-30), Seiten 1-158, XP055480797, DE ISSN: 1866-721X

## Beschreibung

### TECHNISCHES GEBIET

Die Erfindung betrifft das Gebiet der Fahrassistenzsysteme und insbesondere das Gebiet des automatisierten Fahrens.

### TECHNISCHER HINTERGRUND

Moderne Fahrzeuge weisen eine Vielzahl verschiedener Fahrassistenzfunktionen auf, die den Fahrer bei der Routenplanung oder bei der Führung des Fahrzeuges unterstützen.

Beim automatisierten Fahren kann es zu Situationen kommen, bei denen der Fahrer die Fahraufgabe übernehmen muss, bspw. bei Erreichen eines Streckenabschnitts, der nicht automatisiert befahren werden kann. Ist der Fahrer nicht in der Lage, die Kontrolle über das Fahrzeug zu übernehmen, so muss die automatisierte dennoch sicher beendet werden. Der sofortige automatisierte Nothalt im Falle einer Nichtübernahme durch den Fahrer kann den nachfolgenden Verkehr und das Fahrzeug selbst gefährden.

Aus Mirwaldt, P. "Funktionsentwicklung eines Nothalteassistenzsystems bei kardiovaskulär bedingter Fahrunfähigkeit" (2014) ist in diesem Zusammenhang ein Fahrerassistenzsystem bekannt, welches ein Fahrzeug bei Ausbleiben einer geforderten Fahrerübernahme selbsttätig an einen sicheren Halteort überführt.

### OFFENBARUNG DER ERFINDUNG

Es ist daher Aufgabe der Erfindung, ein Verfahren zur Steuerung des Betriebs eines automatischen, zur unabhängigen Fahrzeugführung ausgebildeten Fahrassistenzsystems anzugeben, welches zuverlässig ist und sicher arbeitet.

Diese Aufgabe wird mit einem Verfahren gemäß dem unabhängigen Verfahrensanspruch und einer Vorrichtung gemäß dem unabhängigen Vorrichtungsanspruch gelöst. Die abhängigen Ansprüche betreffen vorteilhafte Ausgestaltungen.

Die Erfindung betrifft ein Verfahren zur Steuerung des Betriebs eines automatischen, zur unabhängigen Fahrzeugführung ausgebildeten Fahrassistenzsystems eines Kraftfahrzeugs. Bei Eintritt wenigstens einer Fahrübernahmebedingung, welche bei Fahrübernahme durch Fahrer zum Deaktivieren des Fahrassistenzsystems führt, wird mindestens eine Übernahmeaufforderung an den Fahrer ausgegeben. Reagiert der Fahrer auf diese Übernahmeaufforderung nicht, so erfolgt ein Umplanen der ursprünglichen Fahrstrecke mit einem ursprünglichen Ziel zu einem Halteplatz, der automatisiert angefahren werden kann. Das Umplanen erfolgt derart, dass der Halteplatz im Kontext der gegenwärtigen Position des Kraftfahrzeugs in Bezug zu dem ursprünglichen Ziel einen nach mindestens einem Optimalitätskriterium bestimmten optimalen Halteplatz darstellt. Durch die Umplanung der Strecke zu einem Halteplatz, der noch automatisiert angefahren werden kann, kann ein sofortiger Nothalt vermieden werden. Zudem erfolgt eine Umplanung derart, dass der Haltplatz im Kontext der Planung eine optimale Lösung bezüglich eines oder mehreren Kriterien ist. Diese Kriterien sind erfindungsgemäß eine kürzeste oder schnellste Strecke vom Halteplatz zum ursprünglichen Ziel. Nicht unter den Schutzbereich fallende Kriterien können beispielsweise sein: beste Erreichbarkeit von öffentlichen Verkehrsmitteln mit denen das ursprünglich Ziel am kürzesten oder am billigsten erreicht werden kann, Nähe zu bestimmten medizinischen Einrichtungen wie Notaufnahme oder Krankenhäuser, Möglichkeit eines sicheren Nothalts.

Es kann vorgesehen sein, dass das Umplanen der ursprünglichen Fahrstrecke erst bei Ausbleiben der Fahrübernahme durch den Fahrer nach einer Mindestanzahl von Fahrübernahmeaufforderungen erfolgt. Optional kann dem Fahrer ein visueller oder akustischer Hinweis gegeben werden, dass bei erneutem Ausbleiben der Fahrübernahme eine Umplanung der ursprünglichen Fahrstrecke durch das Fahrassistenzsystem erfolgt. Hierbei kann dem Fahrer eine Auswahl von Optimalitätskriterien, nach den Umplanung erfolgen kann, präsentiert werden unter denen der Fahrer bewusst auswählen, insoweit er dazu im Stande ist. Alternative kann das Optimalitätskriterium auch voreingestellt sein. Die Möglichkeit eines sicheren Nothalts bei Ausbleiben der Fahrübernahme kurz vor Erreichen des optimalen Halteplatzes kann als Rückfallkriterium vorgesehen sein.

Im Rahmen der Umplanung kann vorgesehen sein, dem Fahrer kurz vor Erreichen des so bestimmten optimalen Haltepunkts erneut zur Fahrzeugübernahme aufzufordern. Erfolgt wieder keine Fahrzeugübernahme, so wird das Fahrzeug am optimalen Halteplatz sicher angehalten und geparkt.

Erfindungsgemäß erfolgt das Umplanen der ursprünglichen Fahrstrecke derart, dass der optimale Halteplatz eine kürzeste oder schnellste Strecke zu dem ursprünglichen Ziel aufweist, die nicht automatisiert befahrbar ist. Die schnellste Strecke kann hierbei unter Berücksichtigung des aktuellen Verkehrsaufkommens und etwaiger Baustellen bestimmt werden. Hat der Fahrer auf eine Übernahmeaufforderung nicht reagiert, die bspw. in der Nähe einer im Rahmen der ursprünglichen Streckenplanung vorgesehenen Autobahnausfahrt erfolgt ist, von der aus ein automatisiertes Fahren bis zum ursprünglichen Ziel nicht mehr möglich war, so wird das Fahrzeug nunmehr bis zu einer weiteren Autobahnausfahrt navigiert, wobei die weitere Autobahnausfahrt in Bezug auf das ursprüngliche Ziel als Haltepunkt so gewählt wird, dass die Strecke von der weiteren Autobahnausfahrt zum ursprünglichen Ziel eine kürzeste oder schnellste Strecke ist. Auf diese Weise kann der Fahrer dennoch im Kontext der gegenwärtigen Position des Kraftfahrzeugs in Bezug auf das ursprüngliche Ziel auf kürzestem oder schnellstem Wege zum Ziel gelangen, wenn er das Fahrzeug kurz vor dem optimalen Haltepunkt übernimmt und von dort aus manuell zum ursprünglichen Ziel steuert.

Übernimmt der Fahrer das Fahrzeug trotz einer kurz vor dem optimalen Haltepunkt erfolgten weiteren Übernahmeaufforderung nicht, so wird das Fahrzeug am optimalen Haltepunkt sicher angehalten und geparkt. Hat der Fahrer diese weitere Übernahmeaufforderung verpasst oder bewusst nicht darauf reagiert, weil er bspw. fahruntüchtig ist, so stellt der optimale Haltepunkt einen Ort dar, von der der Fahrer bspw. durch Angehörige oder Kollegen in Bezug auf das ursprüngliche Ziel auf kürzestem oder schnellstem Wege abgeholt werden kann.

In einer alternativen Ausgestaltung, welche nicht unter den Schutzbereich fällt, erfolgt das Umplanen der ursprünglichen Fahrstrecke derart, dass der optimale Halteplatz eine kürzeste oder schnellste Strecke zu einer Haltestelle von öffentlichen Verkehrsmitteln aufweist. Ist der Fahrer wiederum fahruntüchtig, so kann er sich bewusst dafür entscheiden, dass die Umplanung der ursprünglichen Strecke entsprechend erfolgt und er kann auf diese Weise seine Reise mit öffentlichen Verkehrsmitteln fortsetzen, insoweit die Haltestelle von öffentlichen Verkehrsmitteln noch automatisiert angefahren werden kann. Der optimale Halteplatz kann dabei so bestimmt werden, dass die Haltestelle von öffentlichen Verkehrsmitteln derart gelegen ist, dass das ursprüngliche Ziel mit den öffentlichen Verkehrsmitteln in kürzester Zeit erreichbar ist. Auch hierbei kann die aktuelle Verfügbarkeit von öffentlichen Verkehrsmitteln Berücksichtigung finden. So kann das Fahrassistenzsystem eine Anfrage bei örtlichen Verkehrsbetrieben oder einer überregionalen Eisenbahngesellschaft bezüglich der aktuellen Verfügbarkeit von öffentlichen Verkehrsmitteln stellen. Hierbei kann das Fahrassistenzsystem über eine Mobilfunkschnittstelle auf im Internet verfügbare Portale der örtlichen Verkehrsbetriebe oder der überregionalen Eisenbahngesellschaft zugreifen und dort die entsprechende Information abfragen.

In einer weiteren alternativen Ausgestaltung, welche nicht unter den Schutzbereich fällt, wird bestimmt, ob eine gesundheitliche Beeinträchtigung, die bspw. zu einer Fahruntüchtigkeit des Fahrers führt, vorliegt. Das Fahrassistenzsystem kann hierzu eine entsprechend eingerichtete Innenraumsensorik aufweisen. Wenn bestimmt wurde, dass eine gesundheitliche Beeinträchtigung des Fahrers vorliegt, so kann das Umplanen der ursprünglichen Fahrstrecke derart erfolgen, dass der optimale Halteplatz eine kürzeste oder schnellste Strecke zu einer Einrichtung zur medizinischen Notfallbehandlung wie eine Notaufnahme oder ein Krankenhaus aufweist. Gleichzeitig kann ein Notruf an die entsprechende medizinische Einrichtung abgesetzt werden. Bevorzugt wird dabei der optimale Halteplatz übermittelt, so dass Rettungsfahrzeuge diesen optimalen Halteplatz unmittelbar anfahren können. Dadurch, dass das Kraftfahrzeug sich auf diese Weise aufeinander zubewegen können, kann wertvolle Zeit eingespart werden im Vergleich zu einem Szenario, in welchem ein Nothalt des Kraftfahrzeugs bei der nächsten Gelegenheit vorgenommen wird.

In einer Ausgestaltung der Erfindung wird ein automatisiertes Einparken des Fahrzeugs am optimalen Halteplatz veranlasst. Dies hat den Vorteil, dass bei Fahruntüchtigkeit des Fahrers das Fahrzeug nicht von Dritten eingeparkt werden muss und sich in einer Position befindet, in der es keine Gefahr für andere Verkehrsteilnehmer darstellt.

Die Erfindung betrifft des Weiteren ein Fahrassistenzsystem für ein Kraftfahrzeug, aufweisend: eine Fahrbenutzerschnittstelle eingerichtet zum Ausgeben mindestens einer Fahrübernahmeaufforderung an einen Fahrer bei Eintritt wenigstens einer Fahrübernahmebedingung, welche bei Fahrübernahme durch den Fahrer zum Deaktivieren des Fahrassistenzsystems führt; und ein Navigationssystem eingerichtet zum Umplanen einer ursprünglichen Fahrstrecke mit einem ursprünglichen Ziel, bei Ausbleiben der Fahrübernahme durch den Fahrer, zu einem Halteplatz, der automatisiert angefahren werden kann, wobei der Halteplatz im Kontext der gegenwärtigen Position des Kraftfahrzeugs in Bezug zu dem ursprünglichen Ziel einen nach mindestens einem Kriterium bestimmten optimalen Halteplatz, wobei der optimale Halteplatz eine kürzeste oder schnellste Strecke zu dem ursprünglichen Ziel aufweist, die nicht automatisiert befahrbar ist. Das Navigationssystem kann zusätzlich eine Mobilfunkschnittstelle zur Kommunikation mit einem Backend oder zum Zugriff auf das Internet aufweisen.

### KURZFASSUNG DER FIGUREN

Die Erfindung wird im Folgenden an Hand von Ausführungsbeispielen mit Bezug auf Figuren beschrieben. Es zeigen
- Fig. 1: ein Blockschaltbild eines Fahrassistenzsystems
- Fig. 2: eine Übernahmesequenz
- Fig. 3: ein Flussdiagramm einer Ausführungsform des Verfahrens
- Fig. 4: ein Blockschaltbild eines Fahrassistenzsystems mit Erkennung medizinischer Beeinträchtigungen
- Fig. 5: ein Flussdiagramm einer Ausführungsform des Verfahrens mit Erkennung medizinischer Beeinträchtigungen

### DETAILLIERTE BESCHREIBUNG

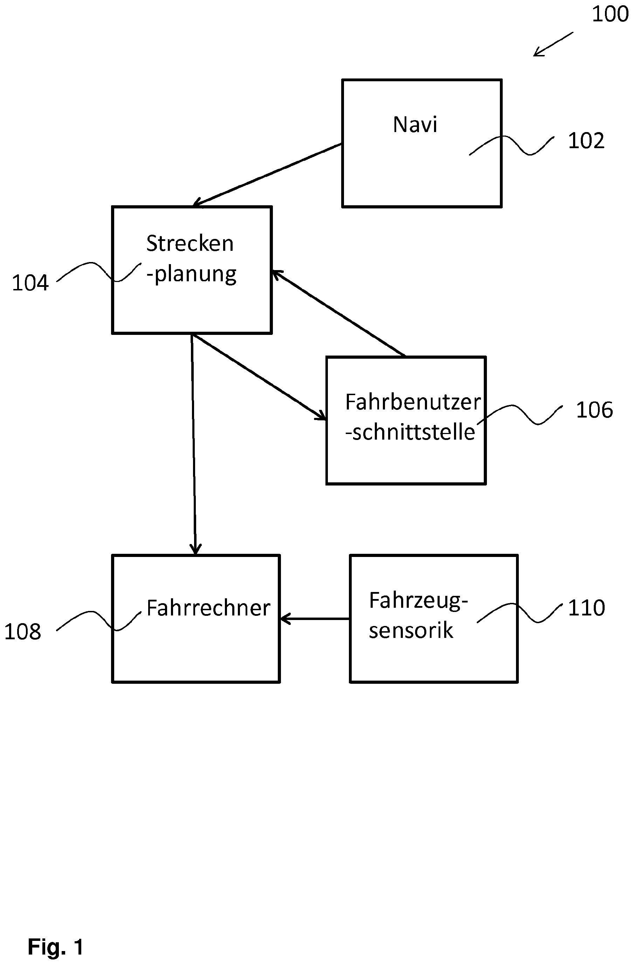

Fig. 1 zeigt ein Blockschaltbild eines Fahrassistenzsystems 100 aufweisend ein Navigationssystem 102, eine Streckenplanungseinheit 104 als zentrale Instanz, eine Fahrbenutzerschnittstelle 106, einen Fahrrechner 108 und eine Fahrzeugsensorik 110. Das Navigationssystem 102 ist mit der Streckenplanungseinheit 104 kommunikativ verbunden und stellt dieser eine elektronische Karte mit einer Datenbasis für Nothaltestellen sowie die aktuelle Position und die Geschwindigkeit zur Verfügung. Die Streckenplanungseinheit 104 ist kommunikativ mit dem Fahrrechner 108 verbunden und eingerichtet, dem Fahrrechner 108 eine Streckenvorgabe zu übermitteln. Der Fahrrechner 108 steuert anhand der Streckenvorgabe Lenkung, Antrieb und Bremsen des Kraftfahrzeugs. Zu diesem Zweck greift der Fahrrechner 108 auf mittels der Fahrzeugsensorik 110 gewonnenen Sensordaten wie Radardaten, Kameradaten, Bilderkennungsdaten, Position und Geschwindigkeit des Fahrzeugs zu.

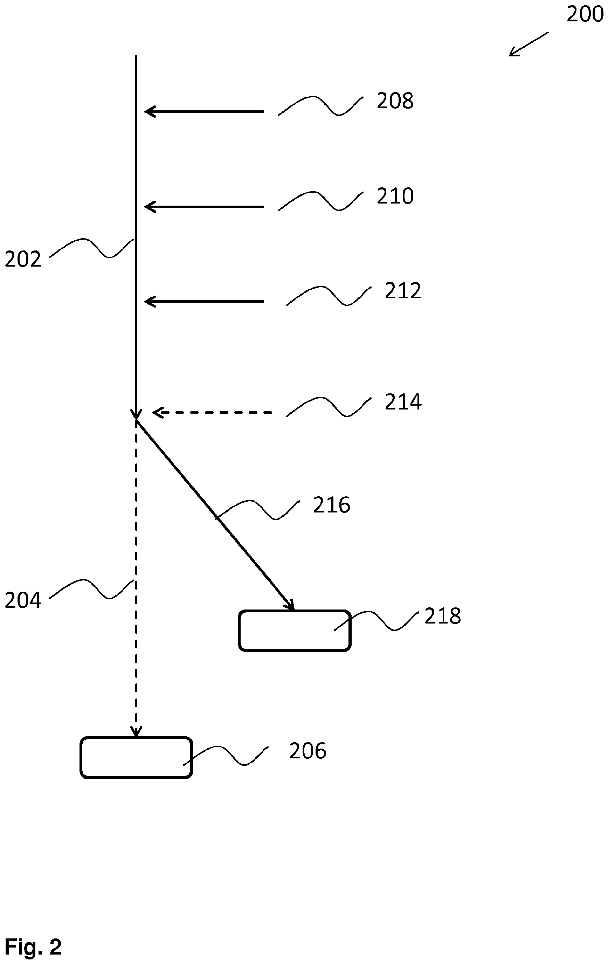

Die Funktion der Streckenplanungseinheit 104 wird in Zusammenhang mit Fig. 2 beschrieben. Die Streckenplanungseinheit 104 ist eingerichtet, im Rahmen einer ursprünglichen Streckenplanung 200 mit automatisiert befahrbarem Streckenabschnitt 202 und nicht automatisiert befahrbaren Streckenabschnitt 204 zu einem ursprünglichen Ziel 206 vor Erreichen des nicht mehr automatisiert befahrbaren Fahrabschnitts 204 eine Mindestanzahl von rechtzeitigen Übernahmeaufforderungen 208, 210, 212, 214 unter Berücksichtigung möglicher Nothalteplätze und möglicher noch automatisiert befahrbarer Alternativstrecken 216 zu erzeugen. Die Übernahmeaufforderungen 208, 210, 212, 214 werden von der Streckenplanungseinheit 104 an die Fahrbenutzerschnittstelle 106 kommuniziert. Die Fahrbenutzerschnittstelle 106 fordert den Fahrer entsprechend den durch die Streckenplanungseinheit 104 erzeugten Übernahmeaufforderungen 208, 210, 212 zur Übernahme der Fahrzeugkontrolle auf. Die Fahrbenutzerschnittstelle 106 kommuniziert der Streckenplanungseinheit 104, ob der Fahrer die Kontrolle über die Fahrzeugsteuerung übernommen hat oder nicht. Hat der Fahrer die Kontrolle übernommen, so schalten sich die Einheiten des Fahrassistenzsystems, die ausschließlich zum automatisierten Fahren benötigt werden, aus. Hat der Fahrer die Kontrolle entsprechend der letzten Übernahmeaufforderung 214 vor Erreichen des Streckenabschnitts 204, der nicht mehr automatisiert befahrbar ist, endgültig nicht übernommen, so berechnet die Streckenplanungseinheit 104 eine noch automatisierte befahrbare Alternativstrecke 216 zu einem sicheren Halteplatz 218. Der sichere Halteplatz im Kontext der Streckenplanung in Bezug auf das ursprüngliche Ziel optimiert, d.h. es muss sich nicht um den nächst möglichen sicheren Halteplatz handeln, sondern dieser wird anhand bestimmter Optimalitätskriterien ausgewählt, wobei der optimale Halteplatz eine kürzeste oder schnellste Strecke zu dem ursprünglichen Ziel aufweist, die nicht automatisiert befahrbar ist.

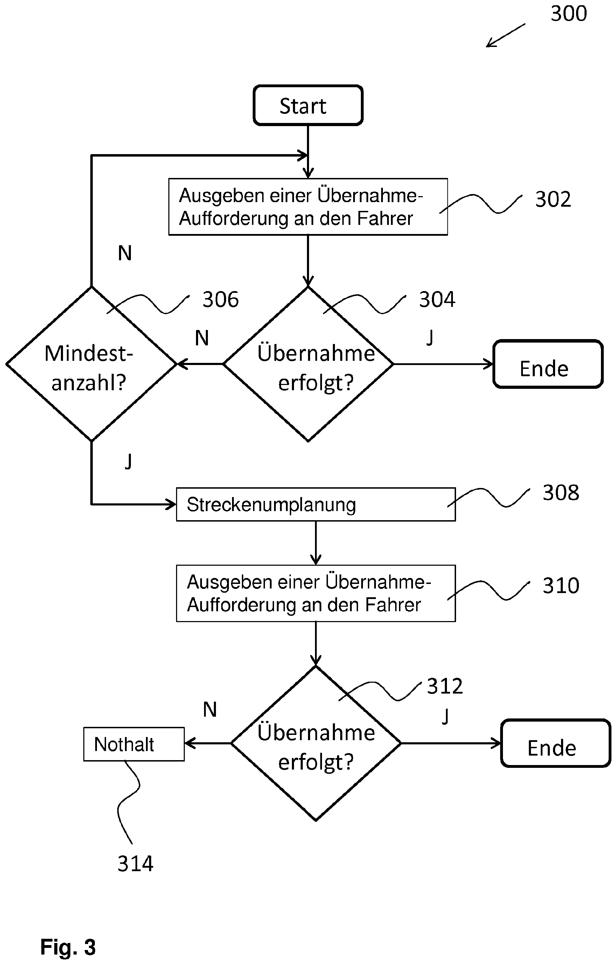

Fig. 3 zeigt ein Flussdiagramm 300 entsprechend einer Ausgestaltung des Verfahrens. In Schritt 302 werden Übernahmeaufforderungen an den Fahrer ausgegeben. In Schritt 304 wird bestimmt, ob eine Übernahme der Fahrzeugkontrolle erfolgt ist. Ist dies der Fall, so wird das Verfahren beendet und das Fahrassistenzsystem schaltet sich ab. Ist dies nicht der Fall, so wird in Schritt 306 bestimmt, ob eine Mindestanzahl von Übernahmeaufforderungen überschritten wurde. Ist dies nicht der Fall, so wird das Verfahren in Schritt 302 fortgesetzt. Ist dies nicht der Fall, so erfolgt in Schritt 308 eine Streckenumplanung zu einem optimalen Halteplatz. Vor Erreichen des optimalen Halteplatz wird in Schritt 310 erneute eine Übernahmeaufforderung an den Fahrer ausgegeben. In Schritt 312 wird bestimmt, ob eine Übernahme der Fahrzeugkontrolle erfolgt ist. Ist dies der Fall, so wird das Verfahren beendet und das Fahrassistenzsystem schaltet sich ab. Ist dies nicht der Fall, so erfolgt ein Nothalt 214 des Fahrzeugs am optimalen Haltepunkt, wobei der optimale Halteplatz eine kürzeste oder schnellste Strecke zu dem ursprünglichen Ziel aufweist, die nicht automatisiert befahrbar ist. Der Nothalt kann mit einem automatisierten Einparken verbunden sein.

In einem weiteren Ausführungsbeispiel ist die Streckenplanungseinheit ausgebildet, den optimalen Nothalt und neugeplante Strecke an die Fahrbenutzerschnittstelle 106 zu übermitteln, die wiederum den Fahrer diese Information visuell oder akustisch anzeigt.

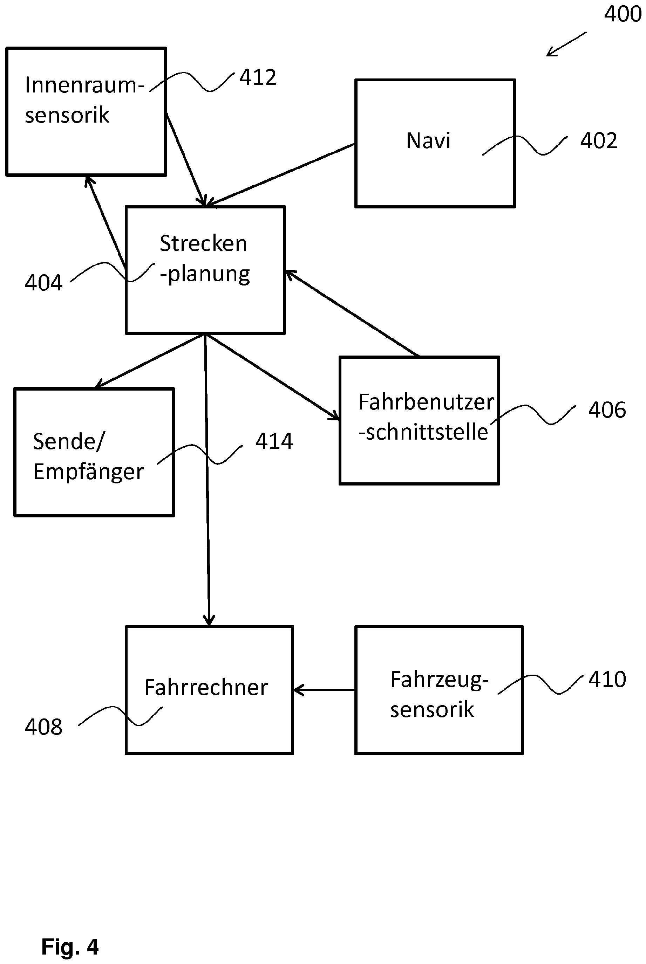

Fig. 4 zeigt ein Blockschaltbild eines Fahrassistenzsystems 400 einer alternativen, nicht unter den Schutzbereich fallenden Ausgestaltung welches in Zusammenhang mit Fig. 2 beschrieben wird. Im Vergleich zu dem in Fig. 1 gezeigten Fahrassistenzsystem 100 weist das Fahrassistenzsystem 400 zusätzlich eine Innenraumsensorik 412 und einen Sende/Empfänger 414 auf. Die Innenraumsensorik 412 kann bspw. eine Innenraumkamera oder ein Fitnessarmband aufweisen und ist ausgebildet, eine mögliche medizinische Beeinträchtigung des Fahrers zu detektieren. Unter medizinische Beeinträchtigung wird jede regelwidrige Abweichung von normalen physischen oder kognitiven Körperfunktionen verstanden, die eine Fahreinschränkung oder Fahruntüchtigkeit des Fahrers zur Folge haben kann, wie Übermüdung, Schlaf, Bewusstlosigkeit, Drogenkonsum, Alkoholkonsum, Herzinfarkt. Die Streckenplanungseinheit 404 fordert diese Information von der Innenraumsensorik 412 an. Die Streckenplanungseinheit 404 ist eingerichtet, im Rahmen einer ursprünglichen Streckenplanung 200 mit automatisiert befahrbarem Streckenabschnitt 202 und nicht automatisiert befahrbaren Streckenabschnitt 204 zu einem ursprünglichen Ziel 206 vor Erreichen des nicht mehr automatisiert befahrbaren Fahrabschnitts 204 eine Mindestanzahl von rechtzeitigen Übernahmeaufforderungen 208, 210, 212, 214 zu erzeugen und an die Fahrbenutzerschnittstelle 406 zu übermitteln. Die Fahrbenutzerschnittstelle 406 kommuniziert der Streckenplanungseinheit 404, ob der Fahrer die Kontrolle über die Fahrzeugsteuerung übernommen hat oder nicht. Hat der Fahrer die Kontrolle übernommen, so schalten sich die Einheiten des Fahrassistenzsystems, die ausschließlich zum automatisierten Fahren benötigt werden, aus.

Hat der Fahrer die Kontrolle nach der ersten Übernahmeaufforderung 208 nicht übernommen, so fordert die Streckenplanungseinheit 404 von der Innenraumsensorik 412 die Information über eine mögliche medizinische Beeinträchtigung des Fahrers an. Wird eine solche medizinische Beeinträchtigung erkannt, so übermittelt die Innenraumsensorik 412 diese Information der Streckenplanungseinheit 404. In dieser alternativen, nicht unter den Schutzbereich fallenden Ausführungsform plant die Streckenplanungseinheit die ursprüngliche Fahrstrecke derart um, dass ein optimaler Halteplatz ermittelt wird, der noch automatisiert angefahren werden kann und eine kürzeste oder schnellste Strecke zu einer Einrichtung zur medizinischen Notfallbehandlung wie eine Notaufnahme oder ein Krankenhaus aufweist. Die Streckenplanungseinheit 404 kann darüber hinaus eingerichtet sein, bis zum Erreichen des optimalen Halteplatzes eine Fahrübernahme des Fahrers zu verhindern, um diesen nicht unnötig zu gefährden. Das Fahrassistenzsystem 400 weist darüber hinaus einen Sende/Empfänger 414. Der Sende/Empfänger 414 ist eingerichtet, ein Notruf an die entsprechende medizinische Einrichtung abgesetzt werden. Der optimale Halteplatz wird übermittelt, so dass Rettungsfahrzeuge diesen optimalen Halteplatz unmittelbar anfahren können.

Entsprechend der Schwere der erkannten medizinischen Beeinträchtigung kann die Streckenplanungseinheit 404 einen Dialog mit dem Fahrer über die Fahrbenutzerschnittstelle triggern, ob eine Einrichtung zur medizinischen Notfallbehandlung angefahren werden soll oder ob eine Umplanung der Strecke zu einem Halteplatz in der Nähe des ursprünglichen Ziels erfolgen soll. Wird durch die Innenraumsensorik 412 bspw. Bewusstlosigkeit oder ein Schlaganfall festgestellt, so unterbleibt dieser Dialog, es erfolgt eine Umplanung der Strecke zu einer Einrichtung zur medizinischen Notfallbehandlung und es wird ein Notruf abgesetzt. Wird durch die Innenraumsensorik 412 keine so schwer wiegende Beeinträchtigung festgestellt, so erfolgt der Dialog über die Fahrbenutzerschnittstelle 406. Insbesondere wird gefragt, ob ein Notruf abgesetzt werden soll.

Die Innenraumsensorik 412 kann ausgebildet sein, eine mögliche medizinische Beeinträchtigung des Fahrers unabhängig von einer nicht erfolgten Fahrübernahme permanent zu überwachen und der Streckenplanungseinheit 404 diese Information zu kommunizieren. Die Streckenplanungseinheit 404 kann daraufhin eine Umplanung der Strecke zu einer medizinischen Einrichtung vornehmen mit ggfs. vorgeschaltetem Dialog mit dem Fahrer.

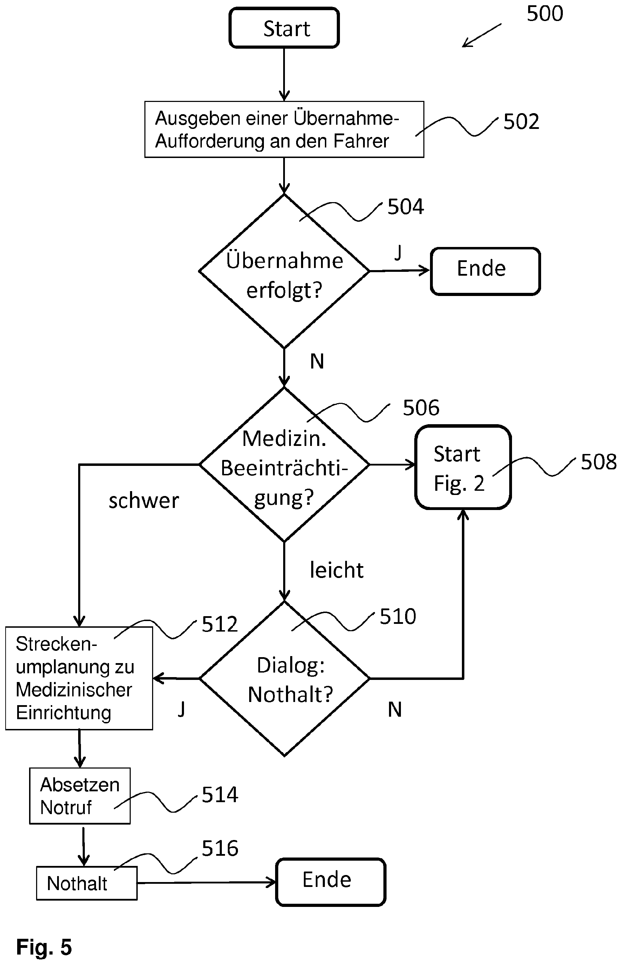

Fig. 5 zeigt ein Flussdiagramm eines alternativen, nicht unter den Schutzbereich fallenden Verfahrens zur Steuerung des Fahrassistenzsystems. In Schritt 502 wird eine Übernahmeaufforderung an den Fahrer ausgegeben. In Schritt 504 wird überprüft, ob eine Fahrübernahme durch den Fahrer erfolgt ist. Ist dies der Fall, so wird das Fahrassistenzsystem betreffend den Teil zur automatisierten Fahrzeugführung abgeschaltet. Ist dies nicht der Fall wird in Schritt 506 ermittelt, ob eine medizinische Beeinträchtigung des Fahrers vorliegt. Ist dies nicht der Fall so wird in Schritt 508 das Verfahren wie in Fig. 2 beschrieben an dessen Beginn (Start) fortgesetzt. Wird eine leichte medizinische Beeinträchtigung des Fahrers ermittelt, so wird in Schritt 510 ein Dialog mit dem Fahrer durchgeführt, ob ein Nothalt an oder in der Nähe einer Einrichtung zur medizinischen Notfallbehandlung durchgeführt werden soll. Wird dies durch den Fahrer verneint, so wird in Schritt 508 das Verfahren wie in Fig. 2 beschrieben an dessen Beginn (Start) fortgesetzt. Wird dies durch den Fahrer bejaht, so erfolgt in Schritt 512 eine Streckenumplanung zu einer Einrichtung medizinischer Notfallbehandlung. Wird in Schritt 506 hingegen festgestellt, dass eine schwere medizinische Beeinträchtigung des Fahrers wie ein Schlaganfall, Herzinfarkt, Bewusstlosigkeit vorliegt, so entfällt der Dialog mit dem Fahrer und das Verfahren wird direkt in Schritt 506 mit Streckenumplanung fortgesetzt. In Schritt 514 wird ein Notruf abgesetzt und der Nothalt der Einrichtung zur medizinischen Notfallbehandlung übermittelt. In Schritt 516 erfolgt der Nothalt und das Fahrassistenzsystem schaltet sich ab. Der Halteplatz für den Nothalt wird in dieser alternativen, nicht unter den Schutzbereich fallenden Ausführungsform so gewählt, dass eine optimale Erreichbarkeit von Rettungsfahrzeugen erfolgen kann. Hierbei kann in Anbetracht des aktuellen Verkehrsaufkommens und der Witterungsverhältnisse die Zeit bis zur Übergabe an die Rettungsfahrzeuge oder die Gesamtzeit bis zum Erreichen der Einrichtung zur medizinischen Notfallbehandlung minimiert werden.

Die derzeitigen autonomen Fahrsysteme erlauben immer nur für relativ einfach zu fahrende Streckenabschnitte wie bspw. Autobahnabschnitte eine automatisierte Fahrweise. Gerade am Ende dieser Streckenabschnitte wird die Übernahme durch den Fahrer, ohne das Gefährdungspotential dieses Streckenabschnitts zu berücksichtigen, vorausgesetzt, so dass auch sehr ungünstige bzw. gefährliche Streckenabschnitte, bspw. Baustellen, Ausfahrten, Kreuzungen, Fahrbahnverengungen für einen Nothalt bei Nichtübernahme durch den Fahrer möglich bzw. sogar wahrscheinlich sind. Dies wird durch die Voraussicht des Fahrautomatisierungssystems vermieden, dass eine sichere Nothaltemöglichkeit bei Nichtübernahme des Fahrers automatisiert anfährt und das Fahrzeug in einer nicht blockierenden Situation und möglichst sicheren Umgebung zum Stillstand bringt, wobei die Nothaltemöglichkeit im Kontext der Reiseplanung zum ursprünglichen Ziel einen optimalen Haltepunkt darstellt, wobei der optimale Halteplatz erfindungsgemäß eine kürzeste oder schnellste Strecke zu dem ursprünglichen Ziel aufweist, die nicht automatisiert befahrbar ist.

## Patentansprüche

1. Verfahren zur Steuerung des Betriebs eines automatischen, zur unabhängigen Fahrzeugführung ausgebildeten Fahrassistenzsystems eines Kraftfahrzeugs, aufweisend:
Ausgeben (303) mindestens einer Fahrübernahmeaufforderung an einen Fahrer bei Eintritt wenigstens einer Fahrübernahmebedingung, welche bei Fahrübernahme durch den Fahrer zum Deaktivieren des Fahrassistenzsystems führt;
bei Ausbleiben der Fahrübernahme durch den Fahrer:
Umplanen (308) einer ursprünglichen Fahrstrecke (200) mit einem ursprünglichen Ziel (206) zu einem Halteplatz (218), der automatisiert angefahren werden kann,
wobei der Halteplatz (218) im Kontext der gegenwärtigen Position des Kraftfahrzeugs in Bezug zu dem ursprünglichen Ziel einen nach mindestens einem Optimalitätskriterium bestimmten optimalen Halteplatz darstellt,**dadurch gekennzeichnet, dass** das Umplanen (308) der ursprünglichen Fahrstrecke derart erfolgt, dass der optimale Halteplatz eine kürzeste oder schnellste Strecke zu dem ursprünglichen Ziel aufweist, die nicht automatisiert befahrbar ist.

2. Verfahren nach Anspruch 1, ferner aufweisend:
Veranlassen eines automatisierten Einparkens des Fahrzeugs am optimalen Halteplatz.

3. Fahrassistenzsystem für ein Kraftfahrzeug, aufweisend:
eine Fahrbenutzerschnittstelle (106) eingerichtet zum Ausgeben mindestens einer Fahrübernahmeaufforderung an einen Fahrer bei Eintritt wenigstens einer Fahrübernahmebedingung, welche bei Fahrübernahme durch den Fahrer zum Deaktivieren des Fahrassistenzsystems führt; und
eine Streckenplanungseinrichtung (104) eingerichtet zum Umplanen einer ursprünglichen Fahrstrecke mit einem ursprünglichen Ziel, bei Ausbleiben der Fahrübernahme durch den Fahrer, zu einem Halteplatz, der automatisiert angefahren werden kann, wobei der Halteplatz im Kontext der gegenwärtigen Position des Kraftfahrzeugs in Bezug zu dem ursprünglichen Ziel einen nach mindestens einem Kriterium bestimmten optimalen Halteplatz darstellt,
**dadurch gekennzeichnet, dass** der optimale Halteplatz eine kürzeste oder schnellste Strecke zu dem ursprünglichen Ziel aufweist, die nicht automatisiert befahrbar ist.

## Claims

1. Method for controlling the operation of an automatic driving assistance system of a motor vehicle, which is designed for independent vehicle guidance, comprising:
outputting (303) at least one driving control takeover request to a driver in the case of an occurrence of at least one driving takeover condition, which brings about deactivation of the driving assistance system when driving control is taken over by the driver;
when the driving control is not taken over by the driver: replanning (308) an original route (200) with an original destination (206) to a stopping point (218) which can be approached in an automated manner, wherein the stopping point (218) constitutes an optimum stopping point, determined according to at least one optimality criterion, in the context of the present position of the motor vehicle with respect to the original destination, **characterized in that** the replanning (308) of the original route is carried out in such a way that the optimum stopping point has a shortest or fastest route to the original destination which cannot be travelled along in an automated fashion.

2. Method according to Claim 1, also comprising:
bringing about automated parking of the vehicle at the optimum stopping point.

3. Driving assistance system for a motor vehicle, comprising:
a driver interface (106) configured to output at least one driving control takeover request to a driver in the case of an occurrence of at least one driving takeover condition, which brings about deactivation of the driving assistance system when driving control is taken over by the driver; and
a route planning device (104) configured to replan an original route with an original destination, when the driving control is not taken over by the driver, to a stopping point which can be approached in an automated manner, wherein the stopping point constitutes an optimum stopping point, determined according to at least one criterion, in the context of the present position of the motor vehicle with respect to the original destination, **characterized in that** the optimum stopping point has a shortest or fastest route to the original destination which cannot be travelled along in an automated fashion.

## Revendications

1. Procédé de commande du fonctionnement d'un système d'assistance automatique à la conduite d'un véhicule automobile, lequel système est conçu pour le guidage indépendant du véhicule, le procédé comprenant les étapes suivantes :
délivrer (303) à un conducteur, à l'arrivée d'au moins une condition de prise en charge de conduite, au moins une demande de prise en charge de conduite qui entraîne la désactivation du système d'assistance à la conduite lorsque le conducteur prend en charge la conduite ;
si le conducteur ne prend pas en charge la conduite :
reprogrammer (308) un itinéraire d'origine (200) avec une destination d'origine (206) vers un lieu d'arrêt (218) qui peut être approché automatiquement,
le lieu d'arrêt (218) représentant, dans le contexte de la position actuelle du véhicule automobile par rapport à la destination d'origine, un lieu d'arrêt optimal déterminé selon au moins un critère d'optimalité, **caractérisé en ce que** la reprogrammation (308) de l'itinéraire d'origine est effectuée de telle manière que le lieu d'arrêt optimal comporte un trajet le plus court ou le plus rapide vers la destination d'origine qui ne peut pas être parcouru de manière automatique.

2. Procédé selon la revendication 1, comprenant en outre :
ordonner le stationnement automatisé du véhicule sur le lieu d'arrêt optimal.

3. Système d'assistance à la conduite destiné à un véhicule automobile, ledit système comprenant :
une interface utilisateur de conduite (106) conçue pour délivrer à un conducteur, à l'arrivée d'au moins une condition de prise en charge de conduite, au moins une demande de prise en charge de conduite qui entraîne la désactivation du système d'assistance à la conduite lorsque le conducteur prend en charge la conduite ; et
un dispositif de programmation d'itinéraire (104) conçu pour reprogrammer un itinéraire d'origine avec une destination d'origine, si le conducteur ne prend pas en charge la conduite, vers un lieu d'arrêt qui peut être approché automatiquement, le lieu d'arrêt représentant, dans le contexte de la position actuelle du véhicule automobile par rapport à la destination d'origine, un lieu d'arrêt optimal déterminé selon au moins un critère, **caractérisé en ce que** le lieu d'arrêt optimal comporte un trajet le plus court ou le plus rapide vers la destination d'origine qui ne peut pas être parcouru de manière automatique.
